# EUROPÄISCHE PATENTSCHRIFT

(11) **EP 2 723 999 B1**
(45) Veröffentlichungstag und Bekanntmachung des Hinweises auf die Patenterteilung: **07.08.2019**
(21) Anmeldenummer: 12723489.6
(22) Anmeldetag: 24.05.2012
(51) Int. Cl.: F01N 3/20

(54) **EINSPRITZVORRICHTUNG**
INJECTION DEVICE
DISPOSITIF D'INJECTION

(30) Priorität: 22.06.2011 DE 102011077953
(43) Veröffentlichungstag der Anmeldung: 30.04.2014
(73) Patentinhaber: Robert Bosch GmbH, 70442 Stuttgart (DE)
(72) Erfinder: GOTTWALD, Frank, 71287 Weissach (DE)
(86) Internationale Anmeldenummer: PCT/EP2012/059722
(87) Internationale Veröffentlichungsnummer: WO 2012/175282

(56) Entgegenhaltungen:
- DE-A1-102006 060 838
- DE-A1-102008 009 650
- DE-A1-102008 036 265
- DE-A1-102009 029 534
- JP-A- S59 517

## Beschreibung

### Stand der Technik:

Die Erfindung betrifft eine multifunktionale Vorrichtung zum Einspritzen eines Fluids, insbesondere in den Abgasstrang eines Verbrennungsmotors.

Es ist bekannt, wässrige Harnstofflösung (AdBlue®) in den Abgasstrang von Verbrennungsmotoren, insbesondere Dieselmotoren, einzuspritzen, um die in den Abgasen enthaltenen Stickoxide zu reduzieren. Weist ein zum Einspritzen der wässrigen Harnstofflösung in den Abgasstrang vorgesehenes Fördermodul eine nicht volumetrisch fördernde Pumpe auf, so ist ein Rücklauf erforderlich, um überschüssige, von der Pumpe geförderte Menge Harnstofflösung von der Druckseite der Pumpe zurück auf die Saugseite zu befördern und den Einspritzdruck konstant zu halten. In der Rücklaufleitung ist vorzugsweise eine variable Drossel vorgesehen, so dass der Einspritzdruck durch Verändern des Drosselquerschnitts eingestellt werden kann.

Um Luft(blasen) aus dem Fördermodul zu entfernen, ist es notwendig, den Rücklauf komplett zu schließen.

Um das Fördermodul eisdruckfest zu machen, ist es bekannt, durch die Einspritzöffnung impulsartig eine kleine Luftmenge einzusaugen und so in dem Fördermodul ein mit Luft gefülltes Ausgleichsvolumen für die wässrige Harnstofflösung zu schaffen. Um solch ein impulsartiges Einsaugen auszulösen, wird der Querschnitt der regelbaren Drossel, die in der Rücklaufleitung angeordnet ist, sehr schnell (z.B. innerhalb von ca. 40 ms) um mehr als das 100-fache vergrößert.

Die drei beschriebenen Funktionen (Druckregelung, Entlüften des Fördermoduls und Einsaugen von Luft zur Verbesserung der Eisdruckfestigkeit) können mit einem 2/3-Wege-Ventil realisiert werden, das zwei Anschlüsse und die genannten drei Funktionen aufweist.

Zusätzlich zu den genannten drei Funktionen besteht häufig der Bedarf, das Einspritzsystem vollständig zu entleeren. Dafür wird herkömmlicherweise die im Normalbetrieb zum Einspritzen des Fluids vorgesehene Pumpe verwendet. Die Pumpe wird dazu über ein zusätzliches 4/2-Wege-Ventil so geschaltet, dass ihr Eingang und Ausgang vertauscht sind und die Harnstofflösung durch Betreiben der Pumpe aus dem Fördermodul abgesaugt und zurück in den Tank gefördert wird.

In einem derartigen Einspritzsystem sind zwei umschaltbare Ventile, ein 2/3-Wege-Ventil und ein 4/2-Wege-Ventil, notwendig, um die gewünschten vier Funktionen zu realisieren. Dokument JP S59 517 A beschreibt eine Abgasreinigungseinrichtung mit einer Hilfspumpe im Rücklauf.

### Offenbarung der Erfindung:

Aufgabe der Erfindung ist es, ein einfach aufgebautes Einspritzsystem bereitzustellen, mit dem die genannten Funktionen einschließlich einer kompletten Entleerung des Systems realisierbar sind.

Eine erfindungsgemäße Vorrichtung zum Einspritzen eines Fluids, insbesondere in den Abgasstrang eines Verbrennungsmotors, weist ein Reservoir zum Speichern des einzuspritzenden Fluids, ein Einspritz- und Dosiermodul, das ausgebildet ist, um das Fluid in den Abgasstrang einzuspritzen, und eine Pumpe auf, die ausgebildet ist, um im Betrieb Fluid aus dem Reservoir zum Einspritz- und Dosiermodul zu fördern. Es ist auch eine Rücklaufleitung vorgesehen, durch die überschüssiges Fluid von dem Einspritz- und Dosiermodul abführbar ist. In der Rücklaufleitung ist ein schaltbares Drosselventil angeordnet, das in einem Pumpmodus betreibbar ist, in dem das Drosselventil als Pumpe wirkt und Fluid aus dem Einspritz- und Dosiermodul abpumpt.

Dadurch, dass das Drosselventil erfindungsgemäß geeignet ist, Fluid aus dem Einspritz- und Dosiermodul abzupumpen, kann auf ein zusätzliches schaltbares Ventil, das die Pumpe zwischen einem Einspritzmodus zum Einspritzen des Fluids in den Abgasstrang und einem Absaugmodus zum Absaugen des Fluids aus dem Einspritz- und Dosiermodul umschaltet, verzichtet werden. Eine erfindungsgemäße Vorrichtung ist daher einfacher und kostengünstiger als die bisher im Stand der Technik bekannten Einspritzvorrichtungen realisierbar.

In einer Ausführungsform ist das Drosselventil in weitere Betriebszustände schaltbar, in denen das Drosselventil wahlweise vollständig geschlossen, vollständig geöffnet oder teilweise geöffnet ist. Mit einem derartigen umschaltbaren Drosselventil kann alternativ zum Abpumpen des Fluids (Pumpmodus) der Einspritzdruck im Einspritz- und Dosiermodul gesteuert bzw. geregelt werden (Drosselventil teilweise geöffnet), das Einspritz- und Dosiermodul entlüftet werden (Drosselventil vollständig geschlossen) und/oder impulsartig Luft in das Einspritz- und Dosiermodul eingesaugt werden (Drosselventil vollständig geöffnet), um dessen Eisdruckfestigkeit zu erhöhen. Mit einem derartigen Drosselventil können alle im Betrieb benötigten Funktionen mit einem einzigen Ventil realisiert werden. Insbesondere kann auf ein zweites Ventil zum Umschalten der Förderrichtung der Pumpe verzichtet werden.

In einer Ausführungsform weist das Drosselventil einen Drosselraum mit wenigstens einem ersten Anschluss und wenigstens einem zweiten Anschluss auf, wobei in dem Drosselraum ein bewegliches Drosselelement angeordnet ist. Durch Bewegen des Drosselelements im Drosselraum kann das Drosselventil geschlossen und vollständig oder teilweise geöffnet werden. Insbesondere kann durch dosiertes Bewegen des Drosselelements der Öffnungsquerschnitt des Drosselventils variabel eingestellt werden, um den Einspritzdruck auf einen gewünschten Wert einzustellen.

In einer Ausführungsform weist das Drosselventil im ersten Anschluss und im zweiten Anschluss zum bzw. vom Drosselraum jeweils ein Rückschlagventil auf, welches die mögliche Flussrichtung im ersten Anschluss bzw. zweiten Anschluss festlegt und einen Fluidfluss entgegen der festgelegten Förderrichtung verhindert. Im ersten Anschluss und im zweiten Anschluss angeordnete Rückschlagventile ermöglichen es, das Drosselventil durch kontinuierliches, oszillierendes Bewegen des Drosselelements als Pumpe zu betreiben und so mit dem Drosselventil die Funktion des Abpumpens von Fluid aus dem Einspritz- und Dosiermodul zu realisieren, ohne dafür eine externe Pumpe zu verwenden. Das Drosselelement übernimmt dabei die Funktion eines Pumpenkolbens.

In einer Ausführungsform wird der Drosselraum auf wenigstens einer Seite durch eine flexible Membran begrenzt und fluiddicht abgeschlossen. Eine flexible Membran ermöglicht es, den Drosselraum zuverlässig abzudichten und Lecks, durch die Fluid aus dem Drosselraum austreten könnte, zu vermeiden. Aufgrund der Flexibilität der Membran ist es möglich, das Volumen des Drosselraums durch Bewegen der Membran zu variieren.

In einer Ausführungsform ist wenigstens ein Federelement vorgesehen, das ausgebildet ist, um das Drosselelement in seine geschlossene Position zu drücken, in der kein Fluidfluss durch das Drosselventil möglich ist. Durch ein derartiges Federelement wird das Drosselventil zuverlässig geschlossen, wenn es nicht angesteuert wird.

In einer Ausführungsform ist ein Antrieb, der z.B. als Linearmagnetantrieb ausgebildet ist, vorgesehen, um das Drosselelement im Betrieb von seiner geschlossenen in eine geöffnete Position zu bewegen. Durch dosiertes Ansteuern des Antriebs kann das Drosselelement exakt in eine gewünschte geöffnete Position bewegt werden. Dies ermöglicht es, am Drosselventil einen gewünschten Öffnungsquerschnitt einzustellen, um einen vorgegebenen Einspritzdruck zu realisieren.

Die Erfindung umfasst auch ein Verfahren des Betreibens einer erfindungsgemäßen Vorrichtung, wobei das Verfahren einschließt, Fluid durch geeignetes Ansteuern des Drosselventils aus dem Einspritz- und Fördermodul abzupumpen. Das Einspritz- und Fördermodul kann so ohne eine externe Pumpe und ohne ein zusätzliches Ventil zum Umschalten der Pumprichtung der Einspritzpumpe vollständig entleert werden.

In einer Ausführungsform umfasst das erfindungsgemäße Verfahren zusätzlich, den Druck im Einspritz- und Dosiermodul durch teilweises, kontrolliertes Öffnen des Drosselventils einzustellen. Der Einspritzdruck kann so auch dann exakt auf einen gewünschten Wert eingestellt werden, wenn es sich bei der Einspritz- bzw. Förderpumpe nicht um eine volumetrisch fördernde Pumpe handelt.

Eine Ausführungsform des Verfahrens schließt ein, durch Abschalten der Pumpe und vollständiges Öffnen des Drosselventils Luft in das Einspritz- und Dosiermodul einzusaugen, um ein Luftvolumen im Einspritz- und Dosiermodul zu schaffen und so die Eisdruckfestigkeit des Einspritz- und Dosiermoduls zu erhöhen.

Eine Ausführungsform des Verfahrens schließt zusätzlich ein, das Drosselventil vollständig zu schließen, um das Einspritz- und Dosiermodul zu entlüften.

Die Erfindung wird im Folgenden anhand der beiliegenden Figuren näher erläutert. Dabei zeigt:
Figur 1 ein schematisches Blockdiagramm einer herkömmlichen Einspritzvorrichtung;
Figur 2 ein schematisches Blockdiagramm einer erfindungsgemäßen Einspritzvorrichtung; und
Figur 3 eine schematische Schnittansicht durch ein erfindungsgemäßes 2/4-Wege-Drosselventil.

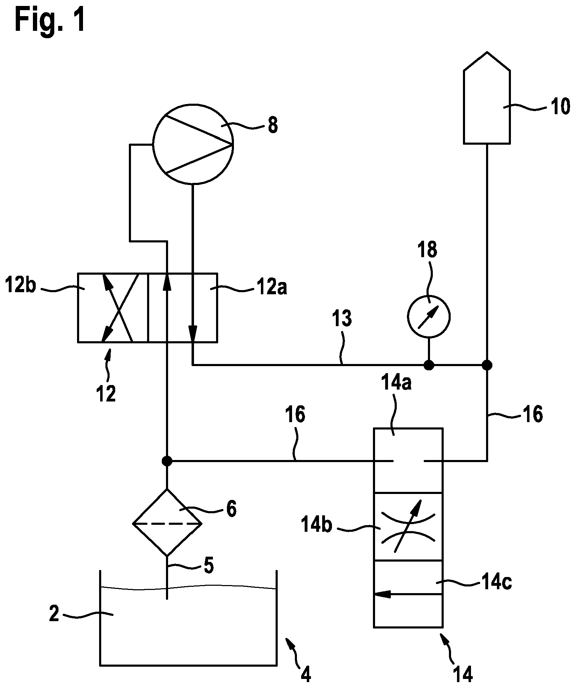

Figur 1 zeigt ein schematisches Blockdiagramm einer herkömmlichen Vorrichtung zum Einspritzen eines Fluids 2.

Die Vorrichtung weist ein Reservoir 4 auf, in dem das einzuspritzende Fluid 2 gespeichert ist. Über eine Fluidentnahmeleitung 5, in der ein Filter 6 geordnet ist, wird das einzuspritzende Fluid 2 aus dem Reservoir 4 entnommen und durch ein 4/2-Wege-Umschaltventil 12, das im Normalbetrieb in eine erste Stellung 12a geschaltet ist, dem Eingang einer Pumpe 8 zugeführt. Die Pumpe setzt das Fluid 2 unter Druck und führt das einzuspritzende Fluid 2 unter erhöhtem Druck durch einen zweiten Kanal des 4/2-Wege-Umschaltventils 12 dem Einspritz- und Dosiermodul 10 zu, das an einem nicht gezeigten Abgasstrang angeordnet und ausgebildet ist, um das ihm zugeführte Fluid in den Abgasstrang einzuspritzen. Mit Hilfe eines in bzw. an der Zuführungsleitung angeordneten Drucksensors 18 kann der Druck des Fluids fortlaufend gemessen und überwacht werden.

Ebenfalls mit dem Einspritz- und Dosiermodul 10 verbunden ist eine Rücklaufleitung 16, die es ermöglicht, Fluid von dem Einspritz- und Dosiermodul 10 zurück zur Eingangsseite der Pumpe 8 bzw. in das Reservoir 4 zu führen. In der Rücklaufleitung 16 ist ein 2/3-Wege-Drosselventil 14 angeordnet, welches zwischen den drei Zuständen: 14a Unterbrechen der Rücklaufleitung, 14b Dosierfunktion zum Einstellen eines gewünschten Einstelldrucks und 14c vollständiger Öffnung zum impulsartigen Ansaugen von Luft umschaltbar ist. Durch Umschalten des Drosselventils 14 in der Rücklaufleitung 16 kann wahlweise einer der drei Betriebszustände eingestellt werden. In der Dosierfunktion 14b kann der Öffnungsquerschnitt des Drosselventils 14 variiert werden, um einen gewünschten Einspritzdruck einzustellen.

Um bei Bedarf Fluid aus dem Einspritz- und Dosiermodul 10 abzupumpen, wird das 4/2-Wege-Schaltventil 12 in den zweiten Betriebszustand 12b geschaltet, in dem das Einspritz- und Dosiermodul 10 mit dem Eingang der Pumpe 8 und das Filter 6 mit dem Ausgang der Pumpe 8 verbunden sind, so dass durch Betreiben der Pumpe 8 Fluid aus dem Einspritz- und Dosiermodul 10 abgesaugt und durch das Filter 6 zurück in das Reservoir 4 gepumpt wird.

Bei einer derartigen Vorrichtung ist neben dem Drosselventil 14 ein zweites schaltbares Ventil 12 erforderlich, um ein Abpumpen von Fluid aus dem Einspritz- und Dosiermodul 10 zu ermöglichen.

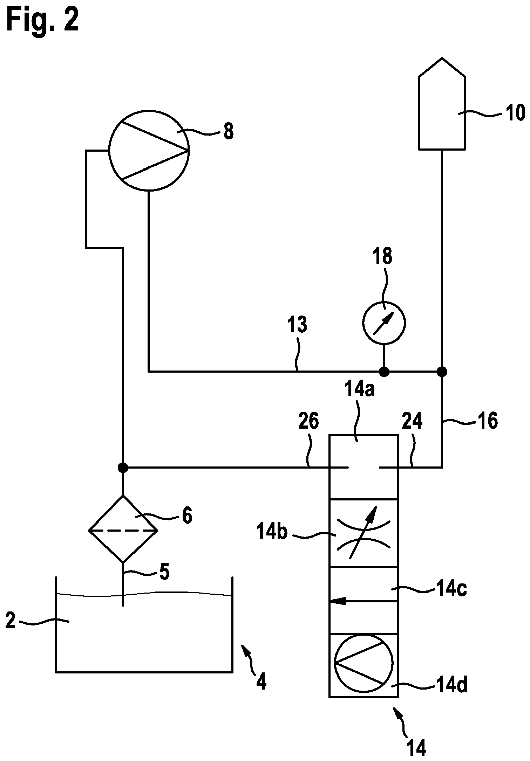

Figur 2 zeigt ein schematisches Blockdiagramm eines Ausführungsbeispiels einer erfindungsgemäßen Einspritzvorrichtung.

Die Bestandteile der Einspritzvorrichtung, die mit den Bestandteilen einer herkömmlichen Einspritzvorrichtung, wie sie in der Figur 1 gezeigt ist, übereinstimmen, sind mit den gleichen Bezugszeichen bezeichnet und werden nicht erneut im Detail beschrieben. Stattdessen wird auf die Beschreibung der Fig. 1 verwwiesen.

Eine erfindungsgemäße Einspritzvorrichtung weist kein 4/2-Wege-Umschaltventil 12 auf, um den Eingang und den Ausgang der Pumpe 8 wahlweise mit dem Filter 6 oder dem Einspritz- und Dosiermodul 10 zu verbinden. Vielmehr ist der Eingang der Pumpe 8 (Ansaugleitung) dauerhaft, d.h. ohne ein zwischengeschaltetes (Umschalt-)Ventil, mit dem Filter 6 verbunden und der Ausgang der Pumpe 8 (Druckleitung) ist dauerhaft mit dem Einspritz- und Dosiermodul 10 verbunden.

Eine erfindungsgemäße Einspritzvorrichtung hat ein modifiziertes Drosselventil 14, das als 2/4-Wege-Drosselventil 4 mit zwei Anschlüssen und vier Funktionen ausgebildet ist. Zusätzlich zu den drei Funktionen eines herkömmlichen Drosselventils 14, wie sie im Zusammenhang mit der Fig. 1 beschrieben worden sind, ist ein erfindungsgemäßes 2/4-Wege-Drosselventil 14 in einen Pumpmodus 14d schaltbar. Im Pumpmodus 14d ist es möglicht, Fluid aus dem Einspritz- und Dosiermodul 10 zum Eingang der Pumpe 8 oder durch das Filter 6 zurück in das Reservoir 4 zu pumpen.

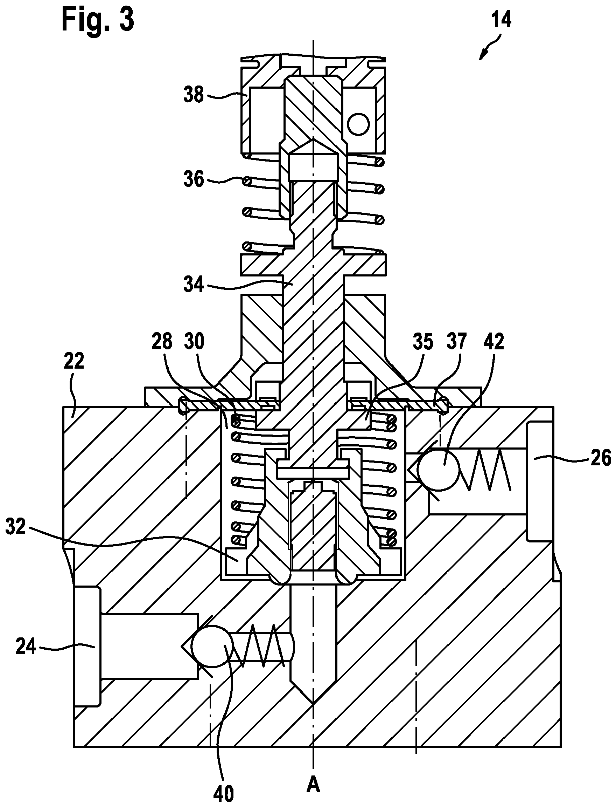

Figur 3 zeigt eine Schnittansicht eines erfindungsgemäßen 2/4-Wege-Drosselventils 14.

Das Drosselventil 14 weist eine Ventilplatte 22 auf, in der ein Ventilraum 28, ein erster Anschluss 24, der im montierten Zustand mit dem Einspritz- und Dosiermodul 10 verbunden ist, und ein zweiter Anschluss 26, der im montierten Zustand mit dem Eingang der Pumpe 8 und dem Filter 6 verbunden ist, ausgebildet sind, wie es in der Figur 2 gezeigt ist.

In dem Ventilraum 28 ist ein Ventilkörper 32 angeordnet, der entlang einer Achse A beweglich ist. Die Mündung des ersten Anschlusses 24 in den Ventilraum 28 kann durch Bewegen des Ventilkörpers 32 wahlweise geöffnet und geschlossen werden. Insbesondere kann der Querschnitt der Öffnung und damit die Drosselwirkung des Drosselventils 14 durch Bewegen des Ventilkörpers 32 zwischen einem vollständig geöffneten Zustand und einem vollständig geschlossenen Zustand variabel eingestellt werden.

Der Ventilkörper 32 ist mechanisch mit einem Schieber 34 verbunden, so dass der Ventilkörper 32 durch Bewegen des Schiebers 34 parallel zur Achse A zwischen der geschlossenen und einer geöffneten Position bewegbar ist. Der Schieber 34 ist durch eine flexible Membran 37, die eine Seite des Ventilraums 28 begrenzt und fluiddicht abschließt, nach außen geführt und ist durch einen externen Antrieb 38, der z.B. als Linearmagnetantrieb ausgebildet ist, antreibbar.

Federelemente 30, 36, die in Form von Spiralfedern um das Ventilelement 32 bzw. den Schieber 36 angeordnet sind und sich an diesen abstützen, drücken das Ventilelement 32 bzw. den Schieber 36 im Ruhezustand, d.h. bei deaktiviertem Antrieb 38 in die geschlossene Position, in der das Ventilelement 32 den ersten Anschluss 24 zum Drosselraum 28 fluiddicht verschließt.

Ein an dem Schieber 34 ausgebildeter Vorsprung 35 wirkt mit der flexiblen Membran 37, die wenigstens eine Seite des Ventilraums 28 begrenzt, zusammen, so dass die Membran 37 zur der dem Ventilraum 28 gegenüberliegenden Außenseite ausgestülpt wird, wenn der Schieber 34 (in der Darstellung der Fig. 3 von unten nach oben) von der geschlossenen in eine geöffnete Position bewegt wird. Durch das Ausstülpen der flexiblen Membran 37 wird das Volumen des Ventilraums 28 vergrößert und der Druck im Ventilraum 28 reduziert.

Im ersten Anschluss 24 zum Ventilraum 28 ist ein erstes Rückschlagventil 40 vorgesehen, das einen Fluidfluss aus dem ersten Anschluss 24 in den Ventilraum 28 ermöglicht und einen Rückfluss von Fluid aus dem Ventilraum 28 in den ersten Anschluss 24 verhindert.

Ebenso ist im zweiten Anschluss 26 aus dem Ventilraum 28 ein zweites Rückschlagventil 42 vorgesehen, das einen Fluidfluss aus dem Ventilraum 28 in den zweiten Anschluss 26 ermöglicht und einen Fluidfluss aus dem zweiten Anschluss 26 in den Ventilraum 28 verhindert.

Ist der Antrieb 38 deaktiviert, werden der Ventilkörper 32 und der Schieber 34 von den Federelementen 30, 36 (nach unten) in die geschlossene Position gedrückt, in der das Drosselventil 14 vollständig geschlossen ist, z.B. um eine vollständige Entlüftung der Einspritzvorrichtung zu ermöglichen.

Durch Aktivieren des Antriebs 38 sind der Schieber 34 und das Ventilelement 32 (nach oben) in eine geöffnete Position bewegbar. Schlagartiges vollständiges Öffnen des Drosselventils 14 mit einer schnellen Bewegung des Ventilkörpers 32 in die vollständig geöffnete Position bewirkt ein impulsartiges Einsaugen von Luft in das Einspritz- und Dosiermodul 10, wodurch dort ein elastisches Luftvolumen geschaffen wird, welches das zusätzliche Volumen gefrierenden Fluids aufnehmen kann und dadurch die Eisdruckfestigkeit des Einspritz- und Dosiermoduls 10 erhöht.

Durch ein nicht vollständiges Öffnen des Drosselventils 14 kann die Drosselfunktion des Drosselventils 14 realisiert werden. Exaktes Ansteuern des Drosselventils 14 in einem nicht vollständig geöffneten Zustand ermöglicht es, einen gewünschten Einspritzdruck im Einspritz- und Dosiermodul 10 einzustellen.

Die erfindungsgemäße Pumpfunktion des Drosselventils 14 ist durch periodisches Bewegen des Schiebers 34 realisierbar. Wird der Schieber 34 durch Ansteuern des Antriebs 38 (nach oben) in Richtung auf den Antrieb 38 bewegt, wird nicht nur der Ventilkörper 32 in eine geöffnete Position bewegt, sondern zusätzlich wird die flexible Membran 37 nach außen gestülpt und das Volumen des Ventilraums 28 vergrößert.

Aufgrund des durch die Vergrößerung des Volumens des Ventilraums 28 bewirkten Druckabfalls im Ventilraum 28 strömt Fluid 2 aus dem ersten Anschluss 24 durch das sich in dieser Strömungsrichtung öffnende Rückschlagventil 40 in den Ventilraum 28. Nachdem der Ventilraum 28 auf diese Weise mit Fluid gefüllt worden ist, wird der Schieber 34 durch eine entsprechende Ansteuerung des Antriebs 38 bzw. nach dem Deaktivieren des Antriebs 38 durch die Kraft der Federelemente 30, 36 in die entgegengesetzte Richtung (nach unten) bewegt. Auch die elastische Membran 37, die mit dem Schieber 34 verbunden ist, wird in diesem Fall nach unten in Richtung auf die Ventilplatte 22 bewegt und verkleinert dabei das Volumen des Ventilraums 28. Die Verkleinerung des Volumens des Ventilraums 28 erhöht den Druck im Ventilraum 28 und das Fluid strömt aus dem Ventilraum 28 durch das zweite Rückschlagventil 42, das im zweiten Anschluss 26 angeordnet ist, in den zweiten Anschluss 26 und von dort zur Eingangsseite der Pumpe oder zurück in das Fluidreservoir 4 (siehe Figur 2).

Durch periodisches Antreiben des Schiebers 34 in einer oszillierenden Bewegung kann so eine Pumpfunktion realisiert und Fluid aus dem ersten Anschluss 24 durch den Pumpenraum 28 in den zweiten Anschluss 26 gepumpt werden. Die beiden Rückschlagventile 40, 42 sind vorzugsweise so ausgebildet, dass sie mit möglichst geringer Kraft bzw. geringem Fluiddruck geöffnet werden können, damit sie bei der Funktion "impulsartiges Rücksaugen", in der es auf ein schnelles Öffnen der Ventile ankommt, keinen merklichen Widerstand darstellen.

Durch die flexible Membran 37 ist das Volumen des Ventilraums 28 variabel. Insbesondere kann sich das Volumen des Ventilraums 28 durch Ausdehnen der Membran 37 vergrößern, wenn das Fluid im Pumpenraum 28 gefriert. Die Erfindung stellt somit eine Einspritzvorrichtung mit einem eisdruckfesten Drosselventil 14 zur Verfügung.

Die erfindungsgemäße Erweiterung des regelbaren Drosselventils 14 von einem 2/3-Wege-Drosselventil 14 auf ein 2/4-Wege-Drosselventil 14 mit zusätzlicher Pumpfunktion reduziert den Aufwand und die Kosten für eines Einspritzvorrichtung, die ein Absaugen von Fluid aus dem Einspritz- und Dosiermodul 10 ermöglicht, erheblich.

## Patentansprüche

1. Vorrichtung zum Einspritzen eines Fluids (2), insbesondere in den Abgasstrang eines Verbrennungsmotors, mit
einem Reservoir (4) zum Speichern des einzupritzenden Fluids (2);
einem Einspritz- und Dosiermodul (10);
einer Pumpe (8), die ausgebildet ist, um im Betrieb Fluid (2) aus dem Reservoir (4) zum Einspritz- und Dosiermodul (10) zu fördern; und
einer Rücklaufleitung (16), die einen Abfluss von Fluid (2) aus dem Einspritz- und Dosiermodul (10) ermöglicht, wobei in der Rücklaufleitung (16) ein schaltbares Drosselventil (14) angeordnet ist,
**dadurch gekennzeichnet, dass**
das Drosselventil (14) derart eingerichtet ist, daß es in einem Pumpmodus betreibbar ist, in dem das Drosselventil als Pumpe wirkt, so daß es Fluid aus dem Einspritz- und Dosiermodul (10) abpumpt (Beschreibung Seite 2, Zeilen 28 bis 31).

2. Vorrichtung nach Anspruch 1 wobei das Drosselventil (14) alternativ zum Abpumpen in mindestens einen der Betriebszustände
- vollständig geschlossen;
- vollständig geöffnet; und
- teilweise geöffnet;
schaltbar ist.

3. Vorrichtung nach Anspruch 1 oder 2, wobei das Drosselventil (14) einen Ventilraum (28) mit wenigstens einem ersten Anschluss (24) und wenigstens einem zweiten Anschluss (26) und einen in dem Ventilraum (28) beweglichen Ventilkörper (32) aufweist.

4. Vorrichtung nach Anspruch 3, wobei das Drosselventil (14) im ersten und zweiten Anschluss (24, 26) jeweils ein Rückschlagventil (40, 42) aufweist.

5. Vorrichtung nach Anspruch 3 oder 4, wobei der Ventilraum (28) auf wenigstens einer Seite durch eine flexible Membran (37) fluiddicht abgeschlossen ist, wobei die Membran (37) durch einen Antrieb (38) bewegbar ist, um das Volumen des Ventilraums (28) zu variieren.

6. Vorrichtung nach einem der Ansprüche 3 bis 5, wobei das Drosselventil (14) wenigstens ein Federelement (30, 36), das ausgebildet ist, um den Ventilkörper (32) in eine geschlossene Position zu drücken, und/oder einen Linearmagneten (38) aufweist, der ausgebildet ist, um den Ventilkörper (32) von der geschlossenen in eine geöffnete Position zu bewegen.

7. Verfahren des Betreibens einer Vorrichtung nach einem der Ansprüche 1 bis 6, wobei das Verfahren einschließt, Fluid (2) durch geeignetes Ansteuern des Drosselventils (14)
abzupumpen.

8. Verfahren des Betreibens einer Vorrichtung nach Anspruch 7, wobei das Verfahren zusätzlich einschließt, den Druck im Einspritz- und Dosiermodul (10) durch teilweises Öffnen des Drosselventils (14) einzustellen.

9. Verfahren des Betreibens einer Vorrichtung nach Anspruch 7 oder 8, wobei das Verfahren zusätzlich einschließt, durch Abstellen der Pumpe (8) und vollständiges Öffnen des Drosselventils (14) Luft in Einspritz- und Dosiermodul (10) einzusaugen.

10. Verfahren des Betreibens einer Vorrichtung nach einem der Ansprüche 7 bis 9, wobei das Verfahren einschließt, das Drosselventil (14) zum Entlüften des Einspritz- und Dosiermoduls (10) vollständig zu schließen.

## Claims

1. Device for injecting a fluid (2), in particular into the exhaust tract of an internal combustion engine, having
a reservoir (4) for storing the fluid (2) to be injected;
an injection and dosing module (10);
a pump (8) which is designed such that, during operation, it delivers fluid (2) from the reservoir (4) to the injection and dosing module (10); and
a return line (16) which permits an outflow of fluid (2) from the injection and dosing module (10), wherein a switchable throttle valve (14) is arranged in the return line (16),
**characterized in that**
the throttle valve (14) is designed such that it can be operated in a pumping mode in which the throttle valve acts as a pump so as to pump fluid out of the injection and dosing module (10) (description page 2, lines 28 to 31).

2. Device according to Claim 1, wherein, alternatively to the pumping-out action, the throttle valve (14) can be switched into at least one of the following operating states:
- fully closed;
- fully open; and
- partially open.

3. Device according to Claim 1 or 2, wherein the throttle valve (14) has a valve chamber (28) with at least one first port (24) and with at least one second port (26), and has a valve body (32) which is movable in the valve chamber (28).

4. Device according to Claim 3, wherein the throttle valve (14) has in each case one check valve (40, 42) in the first and second ports (24, 26).

5. Device according to Claim 3 or 4, wherein the valve chamber (28) is closed off in a fluid-tight manner on at least one side by a flexible diaphragm (37), wherein the diaphragm (37) can be moved by means of a drive (38) in order to vary the volume of the valve chamber (28).

6. Device according to one of Claims 3 to 5, wherein the throttle valve (14) has at least one spring element (30, 36) designed to push the valve body (32) into a closed position, and/or has a linear magnet (38) designed to move the valve body (32) from the closed position into an open position.

7. Method for operating a device according to one of Claims 1 to 6, wherein the method includes pumping fluid (2) out by means of suitable actuation of the throttle valve (14).

8. Method for operating a device, according to Claim 7, wherein the method additionally includes adjusting the pressure in the injection and dosing module (10) by partially opening the throttle valve (14) .

9. Method for operating a device, according to Claim 7 or 8, wherein the method additionally includes sucking air into the injection and dosing module (10) by deactivating the pump (8) and fully opening the throttle valve (14).

10. Method for operating a device, according to one of Claims 7 to 9, wherein the method includes fully closing the throttle valve (14) in order to vent the injection and dosing module (10).

## Revendications

1. Dispositif pour l'injection d'un fluide (2), en particulier dans le tuyau des gaz d'échappement d'un moteur à combustion interne, avec
- un réservoir (4) pour stocker le fluide à injecter (2);
- un module d'injection et de dosage (10);
- une pompe (8), qui est configurée pour transporter en service du fluide (2) du réservoir (4) au module d'injection et de dosage (10); et
- une conduite de retour (16), qui permet un écoulement de fluide (2) hors du module d'injection et de dosage (10), dans lequel une soupape d'étranglement commutable (14) est disposée dans la conduite de retour (16),
**caractérisé en ce que** la soupape d'étranglement (14) est conçue de telle manière qu'elle puisse fonctionner en mode de pompe, dans lequel la soupape d'étranglement opère comme pompe, de telle manière qu'elle pompe du fluide hors du module d'injection et de dosage (10). (Description page 2, lignes 28 à 31).

2. Dispositif selon la revendication 1, dans lequel la soupape d'étranglement (14) peut être commutée pour pomper alternativement dans au moins un des états de fonctionnement:
- totalement fermée;
- totalement ouverte; ou
- partiellement ouverte.

3. Dispositif selon une revendication 1 ou 2, dans lequel la soupape d'étranglement (14) présente une chambre de soupape (28) avec au moins un premier raccord (24) et au moins un second raccord (26) et un corps de soupape (32) mobile dans la chambre de soupape (28).

4. Dispositif selon la revendication 3, dans lequel la soupape d'étranglement (14) présente dans le premier et dans le second raccords (24, 26) respectivement un clapet anti-retour (40, 42).

5. Dispositif selon une revendication 3 ou 4, dans lequel la chambre de soupape (28) est fermée de façon étanche au fluide sur au moins un côté par une membrane flexible (37), dans lequel la membrane (37) est déplaçable au moyen d'un entraînement (38), pour faire varier le volume de la chambre de soupape (28).

6. Dispositif selon l'une quelconque des revendications 3 à 5, dans lequel la soupape d'étranglement (14) présente au moins un élément de ressort (30, 36), qui est configuré en vue de pousser le corps de soupape (32) dans une position fermée, et/ou un aimant linéaire (38), qui est configuré en vue de déplacer le corps de soupape (32) de la position fermée à la position ouverte.

7. Procédé de fonctionnement d'un dispositif selon l'une quelconque des revendications 1 à 6, dans lequel le procédé comprend le pompage de fluide (2) par une commande appropriée de la soupape d'étranglement (14).

8. Procédé de fonctionnement d'un dispositif selon la revendication 7, dans lequel le procédé comprend en plus le réglage de la pression dans le module d'injection et de dosage (10) par une ouverture partielle de la soupape d'étranglement (14).

9. Procédé de fonctionnement d'un dispositif selon une revendication 7 ou 8, dans lequel le procédé comprend en plus l'aspiration d'air dans le module d'injection et de dosage (10) par l'arrêt de la pompe (8) et l'ouverture totale de la soupape d'étranglement (14).

10. Procédé de fonctionnement d'un dispositif selon l'une quelconque des revendications 7 à 9, dans lequel le procédé comprend la fermeture totale de la soupape d'étranglement (14) pour la purge du module d'injection et de dosage (10).
